# EUROPÄISCHE PATENTSCHRIFT

(11) **EP 0 607 783 B1**
(45) Veröffentlichungstag und Bekanntmachung des Hinweises auf die Patenterteilung: **17.03.1999**
(21) Anmeldenummer: 94100033.3
(22) Anmeldetag: 04.01.1994
(51) Int. Cl.: C08L 23/04

(54) **Formmassen zum Kalandrieren von Folien aus thermoplastischen Kunststoffen, thermoplastische Kaschierfolien sowie Verfahren zur Herstellung von Folien**
Molding materials for calendering sheets of thermoplastic plastics, thermoplastic laminated sheets and process for the manufacture of sheets
Matières moulables pour calandrage de feuilles en matières plastiques thermoplastiques, feuilles laminées thermoplastiques et procédé pour la fabrication de feuilles

(30) Priorität: 22.01.1993 DE 4301677
(43) Veröffentlichungstag der Anmeldung: 27.07.1994
(73) Patentinhaber: Tarkett Pegulan GmbH & Co. KG, 67227 Frankenthal (DE)
(72) Erfinder: Müller, Norbert, Dr., D-67227 Frankenthal (DE); Rein, Brigitte, D-67065 Ludwigshafen (DE); Stehfest, Thomas, D-68259 Mannheim (DE)
(74) Vertreter: Grussdorf, Jürgen, Dr.

(56) Entgegenhaltungen:
- WO-A-83/00490

## Beschreibung

Die Erfindung betrifft eine Formmasse zum Kalandrieren von ein- und mehrlagigen Folien zum Kaschieren von Holz-, Metall- und Kunststoffoberflächen aus thermoplastischem Kunststoff sowie ein Verfahren zur Herstellung solcher Folien.

Es ist bekannt Holz-, Metall- und Kunststoffoberflächen, insbesondere in der Möbelindustrie, mit dünnen Kunststoffolien zu überziehen, die durch ihre Strukturierung und Färbung den optischen Eindruck verbessern, z.B. eine Edelholzoberfläche vortäuschen, und durch ihre Zähigkeit und Härte die Verletzbarkeit der Oberfläche durch Kratzer oder Abrieb oder Stöße verringern (vgl. DE-A 33 02 599 und DE-A 36 28 322). Anstelle des früher hauptsächlich verwendeten PVC-Werkstoffs wird aus Umweltschutzgründen heute nach chlorfreien Kunststoffen gesucht. Dafür wurden Polyolefine vorgeschlagen. Um der Folie genügend Festigkeit zu verleihen ist gemäß DE-A 36 28 322 Polypropylen als Hauptbestandteil der Folien enthalten. Da Polypropylen jedoch eine niedere Schmelzviskosität aufzeigt und deshalb nur in engen Temperaturgrenzen verarbeitet werden kann (Kunststoffe 82 (1992) 8, S. 671 ff, Carl Hauser Verlag München) wird gemäß der DE-A 36 28 322 vorgeschlagen bis zu 30 % anderer Kunststoffe, insbesondere Niederdruckpolyethylen, PVA, EVA, EAA oder Mischungen davon zuzusetzen. Um die Bedruckbarkeit zu verbessern enthalten solche Folien üblicherweise auf 100 Teile Kunststoff 50 - 150 Teile Füllstoffe, wie Calciumcarbonat (gecoated), Talkum, Kaolin, Kieselgel oder Cellulose, welche auf Grund ihrer Polarität oder einer polaren Beschichtung die Druckfarben binden.

Als Schutz gegen mechanische Beschädigung kann die Druckschicht noch mit einer durchsichtigen Oberflächenschicht (Lack) abgedeckt sein. Auch solche Mischungen können jedoch nur schlecht auf Kalandern verarbeitet werden, so daß gemäß DE-A 36 28 322 eine Extrusion zur Herstellung vorgeschlagen wird.

Aus der WO 83-00490 ist ferner bekannt, Mischungen mit Polyethylen niederer Dichte (LDPE) mittels Extrusion über Breitschlitzdüsen direkt auf eine zu beschichtende Unterlage aufzubringen.

Es stellte sich daher die Aufgabe, thermoplastische Kaschierfolien aus anderen Werkstoffen zu finden, welche einfach auf Kalandern hergestellt werden können, gut verklebbar und bedruckbar sind und eine hohe Festigkeit und Zähigkeit besitzen.

Überraschenderweise wurde nun gefunden, daß eine Mischung von 35 - 90 Gew.-% Polyethylen hoher Dichte (HDPE) mit extrem niedrigen Schmelzindex MFI (190 °C/21,6 kg) von 3 bis 7 g/10 min mit 10 bis 65 Gew.-% eines Polyethylens niederer Dichte in Form von LLDPE bzw. VLDPE und/oder ULDPE, mit einem Schmelzindex MFI (190 °C/2,16 kg) von < 15 g/10 min und mit bis zu 30 Gew.-%, vorzugsweise 10 - 25 Gew.-%, von einem mineralischen Füllstoff, einerseits sehr gut auf Kalandern zu dünnen Folien verarbeitet werden kann und andererseits diese Folien alle für Kaschierfolien erforderlichen Eigenschaften besitzen.

Die Mischung kann ferner noch Verarbeitungshilfsmittel (Gleitmittel, UV-Stabilisatoren, Antioxidantien, Antistatika) von bis zu 10 Gew.-% und Farbkomponenten enthalten. Um die Bedruckbarkeit bzw. Verklebbarkeit der Folienoberfläche sowohl auf der Ober- als auch auf der Rückseite zu verbessern, fügt man der o.g. Mischung noch bis zu 10 Gew.-%, vorzugsweise 0,5 bis 7 Gew.-%, eines Copolymerisats, eines Ethylen-Acrylsäureesters auf EBA- oder EMA-Basis mit einem Estergehalt von bis zu 40 Gew.-% und/oder ein Terpolymer eines Acrylsäureesters mit einem Comonomergehalt von bis zu 40 Gew.-% und/oder ein PE-Copolymerisat mit Maleinsäureanhydrid mit einem Schmelzindex MFI (230 °C/2,16 kg) von bis zu 30 g/10 min hinzu. Um die Verarbeitbarkeit des Polyethylens hoher Dichte für Kalander-Anlagen entsprechend zu verbessern, ist es notwendig, es mit den o.a. Polyolefinen in den o.a. Bereichen abzumischen, und man erreicht auch dadurch eine gewisse Bandbreite für verschiedene Härten, welche Folien auf PVC-Basis mit einer spezifischen Biegesteifigkeit (nach 1 Tag) von 50 bis 290 mN, die die gleiche Funktion erfüllen, entspricht.

Der feinteilige, mineralische Füllstoff besteht vorzugsweise aus Kreide, Calciumcarbonat und/oder Aluminiumhydroxid, Magnesiumhydroxid oder Magnesium-Verbindungen, wie Huntit und Magnesit, wobei der mittlere Körnungsdurchmesser bis zu 35 µm, vorzugweise 1,0 bis 15 µm, beträgt. Als Verarbeitungshilfen werden Gleitmittel, wie Metallsalze von Carbonsäuren, insbesondere Magnesiumstearat sowie auch Amidwachse und sterisch gehinderte Phenole und/oder Ester auf Polymerbasis zugesetzt, um eine geschlossene, gut verträgliche Oberfläche zu erhalten. Weiterhin kann die Formmasse Farbkomponenten und zusätzlich UV-Stabilisatoren und/oder Antistatika aufweisen, um die spätere Weiterverarbeitung zum Endprodukt hin zu erleichtern. Weitere Ausführungsformen der Erfindung sind den Ansprüchen zu entnehmen.

Als Farbkomponenten werden normale Trockenpigmente, wie sie sonst auch in der PVC-Verarbeitung eingesetzt werden, verwendet. Um die Oberflächengüte der Folien zu verbessern, kann bevorzugt eine transparente bzw. möglichst transparente Lackschicht oder Lacküberzugschicht in einer Stärke von bis zu 30 µm aufgetragen werden. Zwischen der Oberflächenschicht und der Polyolefinfolie als Unterteil wird in einer vorzugsweisen Ausführungsform eine Druckschicht eingebettet. Um eine ausreichende Verklebung mit dem Untergrund zu gewährleisten, kann die Folie auf der Unterseite mit einem Primer oder Haftvermittler in einer mittleren Dicke von bis zu 35 µm, vorzugsweise 10 - 20 µm, versehen werden. Damit die Polyolefinfolie zu der Oberflächenschicht und zu der Primer- oder Haftvermittlerschicht der Unterseite ein verbesserte Haftung erreicht, wird diese einer die Oberflächenadhäsion verbessernden Behandlung in Form einer Coronabehandlung ausgesetzt, wobei jedoch auch andere Bestrahlungsmethoden wie auch eine Fluorierung angewendet werden können. Bei der erfindungsgemäß beschriebenen Polyolefinfolie kann diese aktivierende Oberflächenbehandlung zu einer beliebigen Zeit durchgeführt werden.

Die erfindungsgemäße Verarbeitung erfolgt bevorzugt in der Weise, daß die o.a. Masse als Einzelkomponenten oder als Vormischung in einem Innenmischer oder Heiz- bzw. Kühlmischer, einem Stempelkneter oder einem zweiwelligen Schneckenkneter o.ä. unter Erwärmung gemischt wird, bis die Masse in eine plastifizierte Formmasse aufgeschmolzen ist und hierbei eine Massetemperatur von 160 bis 180 °C einhält. In einem weiteren Plastifizierungsschritt wird die Formmasse auf ein Zwei-Walzen-Mischwalzwerk geführt, wobei die Walzentemperaturen in einem Bereich von 170 bis 190 °C, bevorzugt mindestens 180 °C, liegen. Diese gut plastifizierte, in sich homogene Formmasse kann zwecks weiterer Homogenisierung noch zusätzlich über einen Strainer mit Temperaturen zwischen 145 und 170 °C, vorzugsweise wenigstens 150 °C, geführt werden um dann auf einer Kalander-Anlage zu Folien unterschiedlicher Stärke und Breite ausgewalzt zu werden. Die Kalander-Anlage sollte wenigstens vier Walzen aufweisen, die in der Form F, I, L oder Z angeordnet sein können. Die Kalanderwalzentemperaturen sind, in Arbeitsrichtung gesehen, leicht abfallend, wobei die ersten Einzugswalzen die höchsten Temperaturen, vorzugsweise 180 bis 200 °C, aufweisen und die letzte Kalanderwalze eine Temperatur von 165 bis 180 °C, vorzugsweise 170 bis 175 °C hat, da sie im wesentlichen der Glättung und Kalibrierung der Folie dient.

Nach dem erfindungsgemäßen Verfahren können Polyolefinfolien von einer Stärke bis zu 800 µm, bevorzugt 60 bis 600 µm, hergestellt werden, wobei dann in Abhängigkeit von der Folienstärke, Walzenabzugsgeschwindigkeiten und damit dementsprechende Produktionsgeschwindigkeiten von wenigstens 10 m/min und mehr eingestellt werden können.

In den nachfolgend aufgeführten Anwendungsbeispielen wird aus den einzelnen Komponenten die Masse gemischt und in einem Stempelkneter anplastifiziert, bis die Formmasse eine Massetemperatur von in etwa 150 °C erreicht. Im Anschluß wird die plastifizierte Formmasse auf einem Zwei-Walzen-Walzwerk, dessen Walzen Temperaturen zwischen 180 und 185 °C besitzen, weiter durchhomogenisiert, um nachfolgend über eine Vier-Walzen-Kalanderanlage zu einer 150 µm dicken Folie kalandriert zu werden, wobei die beiden ersten Kalanderwalzen eine Temperatur von 184 °C, die dritte Kalanderwalze eine Temperatur von 180 °C und die vierte Kalanderwalze eine Temperatur von 173 °C aufweisen. Die aufgeführten Anwendungsbeispiele können dann im Anschluß auf einer Kalander-Anlage dupliert und/oder tripliert werden und auf einer Beschichtungsanlage coronabehandelt werden, wo dann nachfolgend auf die Unterseite der auf diese Weise hergestellten Polyolefinfolie ein Haftvermittler oder Primer und auf die Oberfläche eine transparente Lackschicht oder Lacküberzugsschicht aufgetragen werden können.

Als thermoplastische Kunststoffe wurden verwendet:
- ein sehr hochmolekulares Polyethylen hoher Dichte mit einem Schmelzindex MFI (190 °C/21,6 kg) von 3 bis 7 g/10 min (Hostalen® GM 9240 HT);
- ein lineares Polyethylen niedriger Dichte mit einem Schmelzindex MFI (190 °C/2,16 kg) von 9,5 g/10 min (Stamilex® 2H 376);
- ein Ethylen-Octen-Copolymer sehr niedriger Dichte (0,919 g/ml) (VLDPE) mit einem Schmelzindex MFI (190 °C/2,16 kg) von 1,1 g/10 min (DOWLEX® NG 5056 E);
- ein Polyethylen sehr niedriger Dichte (0,905 g/ml) (ULDPE) mit einem Schmelzindex MFI (190 °C/2,16 kg) von 1,0 g/10 min (ATANE® XZ 871 31.32).

Als Füllstoff wurde in den angegebenen Anwendungsbeispielen Aluminiumhydroxid (Martinal® ON 310) verwendet. Als Verarbeitungshilfsmittel wurden u.a. sterisch gehinderte Phenole (Irganox® 1010) sowie Ester auf Polymerbasis (Armowax® W-440) zugesetzt.

Die Zusammensetzung und die Eigenschaften der hergestellten Folien sind in der folgenden Tabelle zusammengefaßt.

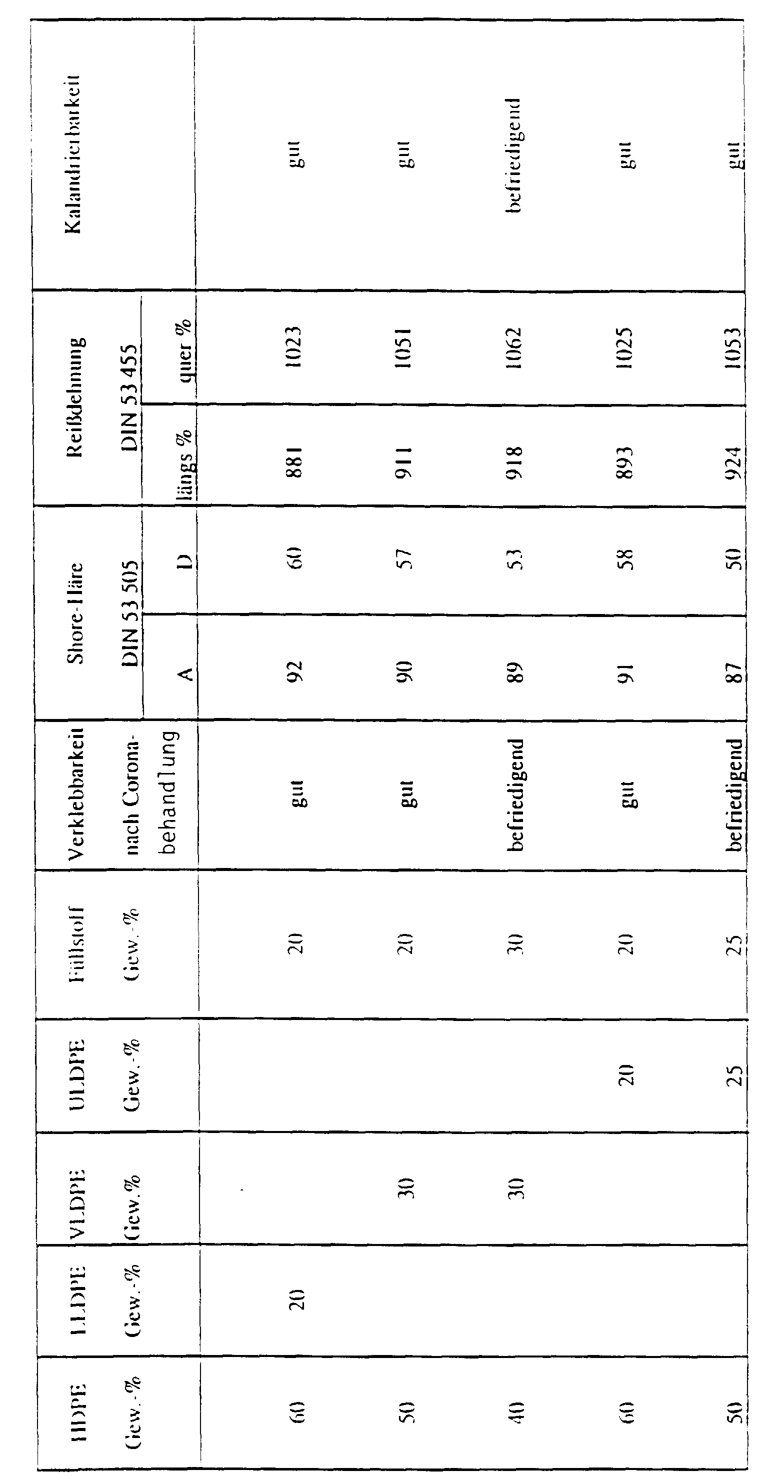

## Patentansprüche

1. Formmasse zum Kalandrieren von Folien aus thermoplastischen Kunststoffen **dadurch gekennzeichnet**, daß der thermoplastische Kunststoff aus einer Mischung von 35 - 90 Gew.-% eines hochdichten Polyethylens (HDPE) mit 10 bis 65 Gew.-% eines Polyethylens niederer Dichte in Form von VLDPE bzw. ULDPE und/oder LLDPE, wobei das verwendete HDPE einen Schmelzindex MFI (190 °C/21,6 kg) von 3 bis 7 g/ 10 min und das verwendete LLDPE, wie auch das verwendete VLDPE bzw. ULDPE einen Schmelzindex MFI (190 °C/ 2,16 kg) von < 15 g/10 min besitzen.

2. Formmasse gemäß Anspruch 1, **dadurch gekennzeichnet**, daß sie mit bis zu 10 Gew.-% eines Copolymerisats eines Ethylen-Acrylsäureesters auf EBA- oder EMA-Basis und/oder eines Terpolymers eines Acrylsäureesters und/oder eines PE-Copolymerisats mit Maleinsäureanhydrid, mit bis zu 30 Gew.-% von einem mineralischen Füllstoff, mit bis zu 10 Gew.-% Verarbeitungshilfsmittel wie Gleitmittel, UV-Stabilisatoren, Antioxidantien oder Antistatika und mit bis zu 25 Gew.-% mit Farbkomponenten bezogen auf den PE-Gehalt versetzt ist.

3. Formmasse gemäß Anspruch 2, wobei das verwendete PE-Copolymerisat mit Maleinsäureanhydrid einen Schmelzindex MFI (190 °C/2,16 kg) von bis zu 10 g/10 min besitzt bzw. das verwendete Copolymerisat eines Ethylen-Acrylsäureesters auf EBA- oder EMA-Basis , einen Estergehalt von bis zu 40 Gew.-% bzw. das Terpolymer eines Acrylsäureesters einen Comonomergehalt von bis zu 40 Gew.-% besitzt, der mineralische Füllstoffanteil aus Kreide, Calciumcarbonat, Aluminiumhydroxid, Magnesiumhydroxid oder Magnesiumverbindungen, wie Huntit und Magnesit besteht, wobei der mittlere Körnungsdurchmesser bis zu 35 µm beträgt, der Anteil an Verarbeitungshilfen wie Gleitmitteln, UV-Stabilisatoren, Antioxidantien oder Antistatika 0,05 bis 5 Gew.-% beträgt.

4. Formmasse nach einem oder mehreren der Ansprüche 1 bis 3, **dadurch gekennzeichnet**, daß das HDPE mit 10 bis 40 Gew.-% Polyethylen niederer Dichte (VLDPE, ULDPE und/oder LLDPE) vermischt ist, welches einen Schmelzindex MFI (190 °C/2,16 kg) von 6 bis 10 g/ 10 min besitzt.

5. Formmasse nach einem oder mehreren der Ansprüche 1 bis 4, **dadurch gekennzeichnet**, daß 0,5 bis 7 Gew.-% eines Polymeren nach Anspruch 2 und 10 bis 25 Gew.-% eines mineralischen Füllstoffes nach Anspruch 2 mit einem Körnungsdurchmesser von 1,0 bis 15 µm enthalten sind.

6. Verfahren zur Herstellung von Folien oder Platten aus einer Mischung von HDPE und VLDPE bzw. ULDPE und/oder LLDPE, **gekennzeichnet durch** Kalandrieren einer thermoplastischen Formmasse, gemäß Anspruch 1 bis 5.

7. Verfahren nach Anspruch 6, **dadurch gekennzeichnet**, daß die thermoplastische Formmasse bei einer Massetemperatur von 160 bis 180 °C gemischt und plastifiziert, anschließend bei Temperaturen von 145 bis 190 °C zu einem Strang bzw. Walzfell weiter homogenisiert und dann bei Temperaturen bis 200 °C kalandriert wird.

8. Verfahren nach einem der Ansprüche 6 bis 7, **dadurch gekennzeichnet**, daß die kalandrierte Folie über eine Dublierkalanderanlage zu einer Endfolie von bis zu 1,5 mm Stärke zusammengefügt und gegebenenfalls mit einem Spezialprägebild versehen, mit einer transparenten Oberflächenschicht aus einer transparenten oder möglichst transparenten Lackschicht oder Lacküberzugsschicht oder Oberflächenfolie von bis zu 30 µm Dicke versehen oder nach einer Coronavorbehandlung der Oberseite der Folie vor dem Aufbringen der Oberflächenschicht oder Oberflächenfolie eine Druckschicht aufgebracht wird.

9. Thermoplastische Kaschierfolien hergestellt nach einem Verfahren gemäß einem der Ansprüche 6 bis 8 aus einer Formmasse gemäß einem der Ansprüche 1 bis 5.

## Claims

1. Moulding material for the calendering of foils of thermoplastic syntbetic materials, characterised in that the thermoplastic synthetic material consists of a mixture of 35 - 90 wt.% of a high density polyethylene (HDPE) with 10 to 65 wt.% of a polyethylene of low density in the form of VLDPE or ULDPE and/or LLDPE, whereby the HDPE used possesses a melt index MFI (190°C/21.6 kg) of 3 to 7 g/10 min and the LLDPE used, as well as also the VLDPE or ULDPE used,possesses a melt index MFI (190°C/2.16 kg) of <15 g/10 min.

2. Moulding material according to claim 1, characterised in that it is mixed with up to 10 wt.% of a co-polymer of an ethylene-acrylic acid ester based on EBA or EMA and/or of a terpolymer of an acrylic acid ester and/or of a PE co-polymer with maleic acid anhydride, with up to 30 wt.% of a mineral filling material, with up to 10 wt.% of working-up adjuvanets, such as lubricants, UV stabilisers, anti-oxidants or anti-statics and with up to 25 wt.% with colour components, referred to the PE content.

3. Moulding material according to claim 2, whereby the PE co-polymer with maleic acid anhydride used possesses a melt index MFI (190°C/2.16 kg) of up to 10 g/10 min or the co-polymer used of an ethylene-acrylic acid ester based on EBA or EMA possesses an ester content of up to 40 wt.% or the terpolymer of an acrylic acid ester possesses a co-monomer content of up to 40 wt.%, the mineral filling material portion consists of chalk, calcium carbonate, aluminium hydroxide, magnesium hydroxide or magnesium compounds, such as huntite and magnesite, whereby the average grain diameter amounts to up to 35 µm, the portion of working-up adjuvants, such as lubricants, UV stabilisers, anti-oxidants or anti-statics amounts to 0.05 to 5 wt.%.

4. Moulding material according to one or more of claims 1 to 3, characterised in that the HDPE is mixed with 10 to 40 wt.% polyethylene of comparatively low density (VLDPE, ULDPE and/or LLDPE) which possesses a melt index MFI (190°C/2.16 kg) of 6 to 10 g/10 min.

5. Moulding material according to one or more of claims 1 to 4, characterised in that there are contained 0.5 to 7 wt.% of a polymer according to claim 2 with a grain diameter of 1.0 to 15 µm.

6. Process for the production of foils or sheets from a mixture of HDPE and VLDFE or ULDPE and/or LLDPE, characterised by calendering of a thermoplastic moulding mass according to claim 1 to 5.

7. Process according to claim 6, characterised in that the thermoplastic moulding material is mixed and plastified at a mass temperature of 160 to 180°C, subsequently further homogenised at temperature of 145 to 190°C to give a cord or rough sheet and is then calendered at temperature of up to 200°C.

8. Process according to one of claims 6 to 7, characterised in that the calendered foil is connected together over a doubling calendering installation to give an end foil of up to 1.5 mm thickness and possibly provided with a special embossed pattern, provided with a transparent surface layer of a transparent or as transparent as possible lacquer layer or lacquer coating layer or surface foil of up to 30 µm thickness or, after a corona pre-treatment of the upper side of the foil, before the application of the surface layer or surface foil, a printed layer is applied.

9. Thermoplastic laminating foil produced according to a process according to one of claims 6 to 8 from a moulding material according to one of claims 1 to 5.

## Revendications

1. Matière moulable pour le calandrage de feuilles en matières plastiques thermoplastiques, caractérisée en ce que la matière plastique thermoplastique est constituée d'un mélange de 35 à 90 % en poids d'un polyéthylène de masse volumique élevée (HDPE) avec 10 à 65 % en poids d'un polyéthylène de faible masse volumique sous forme de VLDPE, respectivement d'ULDPE et/ou de LLDPE, le HDPE utilisé présentant un indice de fusion MFI (190 ºC/21,6 kg) de 3 à 7 g/10 min et le LLDPE utilisé, tout comme le VLDPE, respectivement l'ULDPE utilisé, présentant un indice de fusion MFI (190 ºC/2,16 kg) de < 15 g/10 min.

2. Matière moulable selon la revendication 1, caractérisée en ce qu'elle est dotée jusqu'à 10 % en poids d'un copolymère d'un ester d'acide acrylique éthylène à base d'EBA ou d'EMA et/ou d'un terpolymère d'un ester d'acide acrylique et/ou d'un copolymère PE avec de l'anhydride d'acide maléique, jusqu'à 30 % en poids d'une charge minérale, jusqu'à 10 % en poids d'adjuvants de transformation tels que des lubrifiants, des stabilisateurs aux UV, des antioxydants ou des antistatiques et jusqu'à 25 % en poids de composants colorants rapportés à la teneur en PE.

3. Matière moulable selon la revendication 2, le copolymère PE avec de l'anhydride de l'acide maléique utilisé possède un indice de fusion MFI (190 ºC/2,16 kg) allant jusqu'à 10 g/10 min, respectivement le copolymère un ester d'acide acrylique-éthylène à base d'EBA ou d'EMA utilisé présentant une teneur en ester allant jusqu'à 40 % en poids, respectivement le terpolymère d'un ester d'acide acrylique présentant une teneur en comonomère allant jusqu'à 40 % en poids, la fraction de charge minérale étant composée de craie, de carbonate de calcium, d'hydroxyde d'aluminium, d'hydroxyde de magnésium ou de composés de magnésium, tels que la huntite et la magnésite, le diamètre granulométrique moyen allant jusqu'à 35 µm, la fraction des adjuvants de transformation tels que les lubrifiants, stabilisateurs aux UV, antioxydants ou antistatiques s'élevant à 0,05 à 5 % en poids.

4. Matière moulable selon une ou plusieurs des revendications 1 à 3, caractérisée en ce que le HDPE est mélange à 10 à 40 % de polyéthylène de masse volumique plus basse (VLDPE, ULDPE et/ou LLDPE), lequel présente un indice de fusion MFI (190 ºC/2,16 kg) de 6 à 10 g/10 min.

5. Matière moulable selon une ou plusieurs des revendications 1 à 4, caractérisée en ce qu'y sont contenus de 0,5 à 7 % en poids d'un polymère selon la revendication 2 et de 10 à 25 % en poids d'une charge minérale selon la revendication 2 avec un diamètre granulométrique de 1,0 à 15 µm.

6. Procédé de fabrication de feuilles ou de plaques à partir d'un mélange de HDPE et de VLDPE, respectivement d'ULDPE et/ou de LLDPE, caractérisé par le calandrage d'une matière moulable thermoplastique, selon les revendications 1 à 5.

7. Procédé selon la revendication 6, caractérisé en ce que la matière moulable thermoplastique est mélangée et plastifiée à une température de la matière de 160 à 180 ºC, puis homogénéisée davantage en un boudin ou une feuille roulée à des températures comprises entre 145 à 190 ºC et ensuite calandrée à des températures allant jusqu'à 200 ºC.

8. Procédé selon l'une des revendications 6 à 7, caractérisé en ce que la feuille calandrée est assemblée en une feuille finale d'une épaisseur pouvant aller jusqu'à 1,5 mm au moyen d'une installation de calandrage à doubler et en ce qu'elle est dotée le cas échéant d'une image imprimée spéciale, en ce qu'elle est pourvue d'une couche de surface transparente constituée d'une couche de laque ou d'une couche de revêtement de laque transparente ou la plus transparente possible ou d'une feuille de surface pouvant aller jusqu'à 30 µm d'épaisseur ou en ce qu'une couche imprimée est appliquée après un prétraitement corona à la partie supérieure de la feuille avant l'application de la couche de surface ou de la feuille de surface.

9. Feuilles laminées thermoplastiques fabriquées selon un procédé selon l'une des revendications 6 à 8 à partir d'une matière moulable selon l'une des revendications 1 à 5.
